# FASCICULE DE BREVET EUROPEEN

(11) **EP 2 790 264 B1**
(45) Date de publication et mention de la délivrance du brevet: **31.05.2017**
(21) Numéro de dépôt: 14163270.3
(22) Date de dépôt: 02.04.2014
(51) Int. Cl.: H01M 10/66, F25B 15/00, F25B 29/00, B60L 11/18, H01M 10/6569, B60L 3/00, F25B 15/04, H01M 10/625

(54) **Dispositif de régulation en température d'une batterie d'accumulateurs électriques d'un véhicule automobile et véhicule automobile équipé d'un tel dispositif**
Vorrichtung zur Temperatureinstellung einer Batterie von elektrischen Akkumulatoren eines Kraftfahrzeugs, und mit einer solchen Vorrichtung ausgestattetes Kraftfahrzeug
Device for controlling the temperature in an electric battery of a motor vehicle and motor vehicle provided with such a device

(30) Priorité: 09.04.2013 FR 1353202
(43) Date de publication de la demande: 15.10.2014
(73) Titulaire: Nobel Plastiques, 78300 Poissy (FR)
(72) Inventeur: Milhas, Pierre, 51300 Vitry le Francois (FR); Dandache, Abbas, 57070 Metz (FR); Tanougast, Camel, 57950 Montigny les Metz (FR); Cicero, Lucas, 57540 Petite Rosselle (FR); Ramenah, Harry, 57160 Chatel Saint Germain (FR); Jean, Philippe, 57420 Pontoy (FR)
(74) Mandataire: Lavialle, Bruno François Stéphane

(56) Documents cités:
- EP-A1- 1 728 663
- EP-A1- 2 407 329
- WO-A1-03/043841
- WO-A1-2006/134015
- DE-A1-102008 039 908
- DE-A1-102011 117 058

## Description

L'invention concerne un dispositif de régulation en température d'une batterie d'accumulateurs électriques d'un véhicule automobile ainsi qu'un véhicule automobile équipé d'un tel dispositif. De façon préférée mais non limitative le véhicule automobile est un véhicule à traction électrique.

### ARRIERE PLAN TECHNOLOGIQUE DE L'INVENTION

Les voitures électriques ou les voitures hybrides présentent l'avantage de limiter considérablement les émissions dans l'atmosphère de gaz à effet de serre issus de la combustion de carburant. De telles voitures sont équipées de batteries d'accumulateurs électriques comme des batteries d'accumulateurs lithium-ion.

Néanmoins, de telles batteries d'accumulateurs s'avèrent extrêmement sensibles aux températures extérieures et voient leurs performances (capacité, durée de vie, temps de décharge et de charge...) rapidement dégradées lorsque leur température interne se trouve en dehors d'une courte plage de températures. Pour une batterie d'accumulateurs lithium-ion, la plage de température conseillée est ainsi sensiblement de 20°C à 30°C.

Pour pallier à cet inconvénient, il est connu d'associer à la batterie d'accumulateurs électriques un dispositif de refroidissement de ladite batterie d'accumulateurs. Un tel dispositif comporte un circuit de fluide frigorigène, dit circuit réfrigérant à compression, qui comprend en série successivement un compresseur, un condenseur, un détendeur et un évaporateur. L'évaporateur est mis en relation de transferts thermiques avec la batterie d'accumulateurs électriques : la batterie d'accumulateurs électriques joue ainsi le rôle de source de chaleur pour la réaction endothermique de changement d'état liquide/gaz du fluide frigorigène se déroulant dans l'évaporateur, ce qui permet d'abaisser la température de la batterie d'accumulateurs électriques.

Toutefois, si une voiture électrique ou hybride équipée d'un tel dispositif est endommagée, le circuit peut se trouver percé de sorte que le fluide frigorigène sous sa forme gazeuse peut se répandre dans l'atmosphère. Or les fluides frigorigènes utilisés dans les circuits réfrigérants à compression des voitures électriques ou hybrides sont souvent des gaz à effets de serre et sont donc nocifs pour l'atmosphère. WO03/043841 décrit un dispositif de régulation en température d'une batterie d'un véhicule électrique combinant une boucle compresseur avec une boucle avec bouilleur et absorbeur.

### OBJET DE L'INVENTION

Un but de l'invention est de proposer un dispositif amélioré de régulation en température d'une batterie d'accumulateurs électriques d'un véhicule automobile qui obvie au moins en partie à l'inconvénient précité.

### BREVE DESCRIPTION DE L'INVENTION

En vue de la réalisation de ce but, on propose un dispositif de régulation en température d'au moins une batterie d'un véhicule automobile, la batterie comprenant au moins un accumulateur électrique, le dispositif comportant un circuit fermé qui, en service, est en relation de transferts thermiques avec ladite batterie de sorte à permettre la régulation de la température de la batterie. Le circuit comprend en série successivement :
- un bouilleur comprenant un mélange diphasique d'un gaz régulateur avec un absorbant liquide,
- un condenseur pour condenser le gaz régulateur s'échappant du bouilleur en son état de liquide régulateur,
- des moyens d'abaissement de la pression du liquide régulateur,
- un évaporateur pour évaporer le liquide régulateur et le faire retourner à son état de gaz régulateur,
- un absorbeur pour absorber le gaz régulateur et reformer le mélange diphasique,
- des moyens de pompage du mélange diphasique de l'absorbeur vers le bouilleur.

Le circuit comporte en outre un canal qui autorise la circulation du mélange diphasique du bouilleur vers l'absorbeur et qui s'étend en parallèle des moyens de pompage.

Ainsi, la présence de l'absorbeur, des moyens de pompage, du bouilleur et du canal autorise la régulation de la température de la batterie électrique à partir d'un mélange diphasique : le dispositif de l'invention permet donc de s'affranchir des fluides frigorigènes utilisés dans les circuits réfrigérants à compression qui s'avèrent généralement toxiques pour l'atmosphère.

Si le dispositif se trouve endommagé et percé, le gaz régulateur peut se répandre dans l'atmosphère mais sera bien moins toxique qu'un fluide frigorigène sous forme gazeuse.

Ceci est particulièrement avantageux lorsque le dispositif de l'invention équipe des voitures hybrides ou électriques qui sont destinées à limiter au maximum l'émission de gaz à effets de serre dans l'atmosphère et à être le plus propre possible.

Par ailleurs, le dispositif de l'invention consomme moins d'énergie qu'un dispositif de refroidissement de l'art antérieur du fait de l'absence de compresseur.

On propose également un véhicule automobile comportant au moins une batterie électrique et équipé d'un tel dispositif de régulation.

### BREVE DESCRIPTION DES FIGURES

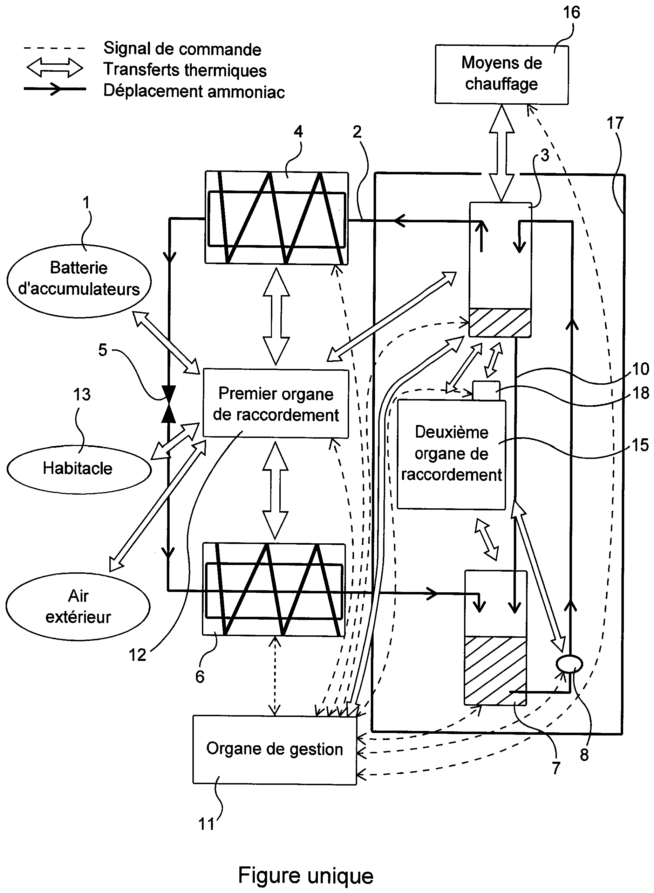

L'invention sera mieux comprise à la lumière de la description qui suit d'un mode de réalisation non limitatif de l'invention. Il sera fait référence à la figure unique annexé qui illustre schématiquement un dispositif de régulation selon l'invention.

### DESCRIPTION DETAILLEE DE L'INVENTION

En référence à la figure unique, le dispositif de régulation en température de l'invention est ici implanté dans une voiture à traction électrique qui comporte une batterie 1 qui comprend ici plusieurs accumulateurs électriques de type lithium-ion. La batterie 1 est la source d'énergie principale du moteur électrique de ladite voiture à traction électrique.

Cette application n'est bien sûr pas limitative et le dispositif de régulation pourra être destiné à refroidir et/ou à réchauffer d'autres types de batteries d'accumulateurs électriques comme des batteries d'accumulateurs lithium-cobalt, lithium-fer-phosphate, lithium-nickel... et être implanté dans d'autres véhicules automobiles comme une voiture hybride ou encore un véhicule deux-roues.

Le dispositif comporte un circuit fermé 2. Le circuit comprend un bouilleur 3 qui comporte ici un mélange diphasique d'eau sous forme liquide et d'ammoniac gazeux.

Le circuit 2 comporte également un condenseur 4 pour condenser l'ammoniac gazeux s'échappant du bouilleur 3 en ammoniac liquide.

Le circuit 2 comporte en outre des moyens d'abaissement de la pression de l'ammoniac liquide, les moyens d'abaissement comprenant ici un détendeur 5.

Le circuit 2 comprend aussi un évaporateur 6 pour évaporer l'ammoniac liquide et le faire retourner à son état d'ammoniac gazeux.

Le circuit 2 comporte également un absorbeur 7 pour absorber l'ammoniac gazeux et permettre la reformation du mélange diphasique.

Le circuit 2 comprend en outre des moyens de pompage 8 du mélange diphasique de l'absorbeur 7 vers le bouilleur 3.

Le bouilleur 3, le condenseur 4, le détendeur 5, l'évaporateur 6, l'absorbeur 7 et les moyens de pompage 8 sont agencés successivement en série dans le circuit 2.

Le circuit 2 comprend en outre un canal 10 qui autorise la circulation du mélange diphasique du bouilleur 3 vers l'absorbeur 7 et qui s'étend en parallèle des moyens de pompage 8.

Un cycle thermodynamique de l'ammoniac va être à présent décrit.

En service, l'ammoniac gazeux va s'échapper du mélange diphasique présent dans le bouilleur 3 pour se diriger vers le condenseur 4. Le mélange diphasique restant dans le bouilleur 3 s'appauvrit donc en ammoniac gazeux et retourne naturellement vers l'absorbeur 7 en traversant le canal 10 du fait de la différence de concentration en ammoniac gazeux entre le mélange diphasique présent dans le bouilleur 3 et le mélange diphasique présent dans l'absorbeur 7.

Lors de son passage dans le condenseur 4, l'ammoniac gazeux se condense en ammoniac liquide au cours d'une réaction exothermique.

L'ammoniac liquide traverse ensuite le détendeur 5 puis l'évaporateur 6. Lors de son passage dans l'évaporateur 6, l'ammoniac liquide se condense en ammoniac gazeux au cours d'une réaction endothermique.

L'ammoniac gazeux débouche ensuite dans l'absorbeur 7 et est absorbé par le mélange diphasique présent dans l'absorbeur 7. De la sorte, le mélange diphasique se trouve régénéré en ammoniac gazeux. Les moyens de pompage 8 permettent de remonter le mélange diphasique enrichi en ammoniac gazeux de l'absorbeur 7 vers le bouilleur 3 et le cycle thermodynamique peut recommencer.

Dans le présent mélange diphasique, l'ammoniac joue donc le rôle de régulateur : les changements d'états de l'ammoniac permettent en effet d'obtenir des réactions endothermiques ou exothermiques nécessaires à la régulation en température de la batterie d'accumulateurs 1. L'eau joue lui le simple rôle d'absorbant.

L'ammoniac sous sa forme gazeuse ou sa forme liquide demeure exclusivement à l'intérieur du circuit de même que l'eau sous forme liquide du mélange diphasique.

Selon un mode de réalisation privilégié, le dispositif comporte un organe de gestion 11 des transferts thermiques du dispositif avec un environnement extérieur au dispositif et notamment avec la batterie d'accumulateurs 1.

L'organe de gestion 11 est ici agencé pour déterminer en continu une quantité d'énergie thermique à transmettre à la batterie d'accumulateurs 1 de sorte que la température de la batterie d'accumulateurs 1 demeure dans une plage de températures de fonctionnement donnée. De façon particulière, l'organe de gestion 11 détermine en continu cette quantité de chaleur à partir de mesures transmises par des premiers capteurs agencés à proximité ou au contact de la batterie d'accumulateurs 1 pour estimer la température de la batterie d'accumulateurs 1 et par des deuxièmes capteurs agencés sur d'autres parties de la voiture de sorte à être au contact de l'air extérieur à la voiture pour estimer la température et l'humidité de l'air ambiant.

L'organe de gestion 11 est agencé pour commander le dispositif à partir de la quantité d'énergie à transmettre à la batterie d'accumulateurs 1.

Grâce à l'organe de gestion 11, le dispositif contrôle et adapte en continu les transferts thermiques entre le dispositif et la batterie d'accumulateurs 1 de sorte à optimiser la régulation en température de la batterie d'accumulateurs 1. Le dispositif de l'invention s'avère particulièrement autonome.

De façon privilégiée, l'organe de gestion 11 contrôle le bouilleur 3, et notamment la température de chauffage du mélange diphasique, de sorte à adapter la quantité d'ammoniac gazeux s'échappant du bouilleur 3 en fonction de la quantité d'énergie à fournir et/ou à évacuer à la batterie d'accumulateurs 1. Il est donc possible d'améliorer grandement le rendement du dispositif.

Selon un mode de réalisation privilégié, le dispositif comporte un premier organe de raccordement 12 qui est ici contrôlé par l'organe de gestion 11 pour mettre en relation de transferts thermiques le condenseur 4 ou l'évaporateur 6 avec la batterie d'accumulateurs 1 en fonction des besoins en régulation thermique de la batterie d'accumulateurs 1. En effet, lorsque l'évaporateur 6 est mis en relation de transferts thermiques avec la batterie d'accumulateurs 1, la batterie d'accumulateurs 1 joue le rôle de source de chaleur pour la réaction endothermique de changement d'état liquide/gaz de l'ammoniac se déroulant dans l'évaporateur 6 ce qui permet d'abaisser la température de la batterie d'accumulateurs électriques. Lorsque le condenseur 4 est mis en relation de transferts thermiques avec la batterie d'accumulateurs 1, le condenseur 4 joue le rôle de source de chaleur pour la batterie d'accumulateurs 1 de par la réaction exothermique se déroulant dans le condenseur 4 ce qui permet d'augmenter la température de la batterie d'accumulateurs 1.

Bien entendu, si la batterie d'accumulateurs 1 n'a pas ou peu besoin d'être chauffée ou refroidie, l'organe de gestion 11 commande le premier organe de raccordement 12 pour mettre en relation de transferts thermiques le condenseur ou l'évaporateur avec l'extérieur de la voiture.

Ainsi, le dispositif permet aussi bien de refroidir que de réchauffer la batterie d'accumulateurs 1 selon que la batterie soit mise en relation de transferts thermiques avec respectivement l'évaporateur 6 ou le condenseur 4. Ceci est particulièrement avantageux car la batterie d'accumulateurs 1 est sensible aux hautes températures de fonctionnement mais également aux basses températures de fonctionnement. Il est ainsi possible de maintenir la batterie 1 dans une plage de températures de fonctionnement optimale.

De la sorte, grâce à l'organe de gestion 11 et au premier organe de raccordement 12, le dispositif selon l'invention contrôle et adapte en continu les transferts thermiques (tous modes et/ou associations de modes de transferts thermiques) entre le dispositif et la batterie d'accumulateurs 1 de sorte à optimiser la régulation en température de chauffage tout comme la régulation en température de refroidissement de la batterie 1. Le dispositif de l'invention s'avère particulièrement autonome.

Le dispositif de l'invention est donc plus performant que les dispositifs de refroidissement de l'art antérieur qui permettent uniquement de refroidir la batterie d'accumulateurs.

Selon un mode de réalisation particulier, le premier organe de raccordement 12 est en outre contrôlé par l'organe de gestion 11 pour mettre en relation de transferts thermiques le condenseur 4 ou l'évaporateur 6 avec l'habitacle 13 de la voiture si la batterie d'accumulateurs 1 n'a pas besoin d'échanger thermiquement avec respectivement le condenseur 4 ou l'évaporateur 6. En effet, lorsque la batterie d'accumulateurs 1 est à une température de fonctionnement telle qu'elle ne nécessite pas d'être chauffée ou refroidie, la quantité d'énergie dégagée au niveau du condenseur 4 peut servir à chauffer l'intérieur de la voiture ou la quantité d'énergie absorbée au niveau de l'évaporateur 6 peut servir à refroidir l'intérieur de la voiture. Le premier organe de raccordement 12 peut également être commandé pour mettre simultanément en relation de transferts thermiques l'habitacle 13 avec le condenseur 4 et la batterie d'accumulateurs 1 avec l'évaporateur 6 et inversement.

Ainsi, le dispositif permet de limiter, entre le dispositif et l'air extérieur à la voiture, les échanges thermiques qui ne présentent pas d'intérêt en favorisant les échanges thermiques entre le dispositif et l'habitacle 13 de la voiture. Le dispositif permet avantageusement de servir de chauffage ou de climatiseur à la voiture tout en régulant la température de la batterie d'accumulateurs 1.

Selon un mode de réalisation particulier, le premier organe de raccordement 12 est en outre contrôlé par l'organe de gestion 11 pour mettre en relation de transferts thermiques le condenseur 4 avec le bouilleur 3 si la batterie d'accumulateurs 1 n'a pas besoin d'échanger thermiquement avec le condenseur 4. En effet, lorsque la batterie d'accumulateurs 1 est à une température de fonctionnement telle qu'elle ne nécessite pas d'être chauffée, la quantité d'énergie dégagée au niveau du condenseur 4 peut servir à chauffer le bouilleur 3.

Il est ainsi possible d'utiliser avantageusement la chaleur naturellement dégagée par la réaction de condensation pour chauffer le bouilleur 3 ce qui permet de limiter l'apport d'énergie extérieure au circuit nécessaire pour chauffer ledit bouilleur 3. La consommation d'énergie du circuit est ainsi limitée.

De préférence, si la batterie d'accumulateurs 1 n'a pas besoin d'échanger thermiquement avec le condenseur 4, l'organe de gestion 11 contrôle le premier organe de raccordement 12 pour mettre en priorité en relation de transferts thermiques le condenseur 4 avec le bouilleur 3 plutôt qu'avec l'habitacle de la voiture 13.

Encore une fois, le dispositif permet de limiter les échanges thermiques entre le dispositif et l'air extérieur et d'optimiser les échanges thermiques du dispositif avec le reste de la voiture ou au sein même du circuit.

Selon un mode de réalisation privilégié, le dispositif comporte un deuxième organe de raccordement 15 qui est ici contrôlé par l'organe de gestion 11 pour mettre en relation de transferts thermiques l'absorbeur 7 avec le bouilleur 3. En effet, la réaction d'absorption se déroulant dans l'absorbeur 7 est exothermique tout comme la réaction se déroulant dans le condenseur : la quantité d'énergie dégagée au niveau de l'absorbeur 7 peut donc servir à chauffer le bouilleur 3.

Plutôt que de rejeter dans l'air extérieur la chaleur dégagée par l'absorbeur 7, il est ainsi possible d'utiliser avantageusement cette chaleur pour chauffer le bouilleur 3 ce qui permet de limiter l'apport d'énergie extérieur au circuit pour chauffer ledit bouilleur 3. La consommation d'énergie du circuit est ainsi limitée. Le dispositif optimise donc encore davantage les échanges thermiques du dispositif avec le reste de la voiture ou au sein même du circuit.

De préférence, le deuxième organe de raccordement 12 est en outre contrôlé par l'organe de gestion 11 pour mettre en relation de transferts thermiques les moyens de pompage 8 avec le bouilleur 3. En effet, les moyens de pompage 8 ont tendance à chauffer lors de l'utilisation du dispositif : la quantité d'énergie dégagée au niveau des moyens de pompage 8 peut donc servir à chauffer le bouilleur 3.

De préférence, l'organe de gestion 11 contrôle le deuxième organe de raccordement 15 pour mettre simultanément en relation de transferts thermiques l'absorbeur 7 et les moyens de pompage 8 avec le bouilleur 3.

Le dispositif optimise donc encore davantage les échanges thermiques du dispositif avec le reste de la voiture ou au sein même du circuit.

De façon particulière, le deuxième organe de raccordement 12 est en outre contrôlé par l'organe de gestion 11 pour mettre en relation de transferts thermiques directement ledit organe de gestion 11 avec le bouilleur 3. En effet, ledit organe de gestion à tendance à chauffer lors de l'utilisation du dispositif : la quantité d'énergie dégagée au niveau dudit organe de gestion peut donc servir à chauffer le bouilleur 3.

Selon un mode de réalisation particulier, le deuxième organe de raccordement 12 est en outre contrôlé par l'organe de gestion 11 pour mettre en relation de transferts thermiques des moyens électroniques de contrôle 18 du deuxième organe de raccordement 15 avec le bouilleur 3. En effet, lesdits moyens ont tendance à chauffer lors de l'utilisation du dispositif : la quantité d'énergie dégagée au niveau desdits moyens peut donc servir à chauffer le bouilleur 3.

De préférence, l'organe de gestion 11 contrôle le deuxième organe de raccordement 15 pour mettre simultanément en relation de transferts thermiques l'absorbeur 7, les moyens de pompage 8, l'organe de gestion 11 et les moyens électroniques de contrôle 18 avec le bouilleur 3.

Le dispositif optimise donc encore davantage les échanges thermiques du dispositif avec le reste de la voiture ou au sein même du circuit.

Selon un mode de réalisation particulier, le dispositif comporte en outre des moyens de chauffage 16 du bouilleur 3 qui comportent ici un capteur thermique et une source de rayonnement associée au capteur thermique. La source de rayonnement comporte par exemple une lampe à diode électroluminescente (lampe LED) ou toute autre source lumineuse de technologie LED. De façon connue en soi, le capteur thermique permet de convertir l'énergie lumineuse de la source de rayonnement en énergie thermique utilisable pour chauffer le bouilleur. Le capteur thermique peut ainsi comprendre au moins un panneau photovoltaïque ou tout autre panneau solaire thermique.

Ainsi, les moyens de chauffage 16 sont suffisants pour chauffer seuls le bouilleur 3 tout en ayant une faible consommation d'énergie.

De façon privilégiée, l'organe de gestion 11 commande les moyens de chauffage 16 pour atteindre la température de chauffage du mélange diphasique désirée dans le bouilleur 3 uniquement si les transferts thermiques entre le bouilleur 3 et l'absorbeur 7 et/ou entre le bouilleur 3 et le condenseur 4 et/ou le bouilleur 3 et les moyens de pompage 8 ne sont pas suffisants pour permettre d'atteindre seuls la température de chauffage précitée. En particulier, les moyens de chauffage 16 peuvent s'avérer uniquement nécessaires pour initier le chauffage du bouilleur 3 lorsque le cycle thermodynamique débute pour la première fois, la chaleur dégagée ensuite par le condenseur 4 et/ou l'absorbeur 7 et/ou les moyens de pompage 8 suffisant alors à chauffer seule le bouilleur 3.

Cela permet encore davantage de limiter la consommation en énergie du dispositif et d'optimiser les échanges thermiques entre les différents éléments du dispositif.

Selon un mode de réalisation particulier, le dispositif comporte une première enceinte 17 en un matériau thermiquement isolant dans laquelle l'absorbeur 7, le bouilleur 3 et les moyens de pompage 8 sont agencés de sorte à être séparés du reste du circuit. Le deuxième organe de raccordement 15 est ici agencé également dans la première enceinte 17.

De la sorte, on limite les transferts thermiques non contrôlés entre le condenseur 4 et l'absorbeur 7 ou le bouilleur 3 et entre l'évaporateur 6 et l'absorbeur 7 ou le bouilleur 3. Les transferts thermiques sont ainsi davantage contrôlés au sein du dispositif.

Le dispositif décrit permet une gestion intelligente des transferts thermiques générés au cours des cycles thermodynamiques du circuit. En particulier, le dispositif permet d'adapter en continu l'énergie thermique échangée avec la batterie d'accumulateurs 1 et de limiter au maximum les échanges thermiques avec l'air extérieur à la voiture.

Bien entendu l'invention n'est pas limitée au mode de réalisation décrit et on peut y apporter des variantes de réalisation sans sortir du cadre de l'invention tel que défini par les revendications.

En particulier, on rappelle que la relation de transferts thermiques d'un élément X avec un élément Y ne nécessite pas obligatoirement un contact physique entre les éléments X et Y. La relation de transferts thermiques peut en effet s'effectuer en mettant en contact l'air environnant l'élément X avec l'air environnant l'élément Y. Le premier organe de raccordement pourra ainsi comprendre un système de ventilation permettant la circulation de l'air environnant la batterie d'accumulateurs autour du condensateur.

En particulier, bien qu'ici le mélange diphasique soit formé d'ammoniac en tant que régulateur et d'eau en tant qu'absorbant, le circuit pourra comporter d'autres mélanges diphasiques permettant des transferts thermiques avec la batterie d'accumulateurs électriques comme par exemple un mélange diphasique eau/bromure de lithium, l'eau étant alors le régulateur et le bromure l'absorbant. Le dispositif de l'invention ne comporte ainsi pas un unique fluide frigorigène mais un mélange diphasique qui est bien moins dangereux pour l'atmosphère.

Bien qu'ici les moyens d'abaissement de pression comportent un détendeur, les moyens d'abaissement de pression pourront comprendre tout autre élément apte à abaisser la pression du liquide régulateur comme par exemple un régulateur de pression.

Bien qu'ici l'organe de gestion des transferts thermiques commande le dispositif en continu en fonction d'une quantité d'énergie thermique à transmettre à la batterie d'accumulateurs, l'organe de gestion pourra commander le dispositif différemment. Par exemple, l'organe de gestion des transferts thermiques pourra se contenter de gérer les transferts thermiques entre le condenseur ou l'évaporateur et la batterie d'accumulateurs en fonction d'une différence entre une température de consigne et une température effective de la batterie d'accumulateurs sans adapter en continu la quantité d'ammoniac gazeux s'échappant du bouilleur. L'organe de gestion pourra commander le dispositif à partir d'autres paramètres que la température de chauffage du bouilleur comme la vitesse de pompage des moyens de pompage.

Le dispositif pourra ne pas comporter d'organe de gestion des transferts thermiques, la mise en relation de transferts thermiques entre le circuit et la batterie d'accumulateurs étant alors assurée par un organe de commande extérieur au dispositif comme un calculateur lié à la batterie d'accumulateurs.

Bien qu'ici le premier organe de raccordement soit agencé pour mettre en relation de transferts thermiques le condenseur avec le bouilleur, le premier organe de raccordement pourra être agencé pour mettre en relation de transferts thermiques le condenseur ou l'évaporateur avec d'autres éléments du circuit comme par exemple l'évaporateur avec l'absorbeur.

Le dispositif pourra comporter un troisième organe de raccordement pour, en service, mettre en relation de transferts thermiques l'absorbeur avec l'habitacle du véhicule.

Bien qu'ici les moyens de chauffage comportent une lampe LED ou une source lumineuse de technologie LED comme source de rayonnement, les moyens de chauffage pourront comprendre tout autre moyen adapté à rayonner vers le capteur thermique. Les moyens de chauffage pourront comporter d'autres sources de chaleur comme des lampes à chaleur de type halogène infrarouge.

Le dispositif pourra éventuellement ne pas comporter de moyens de chauffage du bouilleur si les transferts thermiques entre le bouilleur et l'absorbeur et/ou entre le bouilleur et les moyens de pompage et/ou entre le bouilleur et le condenseur et/ou entre le bouilleur et l'organe de gestion et/ou entre le bouilleur et les moyens électroniques de commande sont suffisants pour permettre seuls le chauffage du bouilleur lors du fonctionnement du dispositif.

Le dispositif pourra comporter un séparateur agencé en série dans le circuit entre le bouilleur et le condenseur afin de séparer l'ammoniac gazeux s'échappant du bouilleur d'éventuelles gouttelettes d'eau ou d'ammoniac liquide s'étant évaporées avec lui. Le séparateur permet le retour des gouttelettes dans le bouilleur de sorte que l'ammoniac gazeux pénétrant dans le condenseur soit bien moins pollué par les gouttelettes.

## Revendications

1. Dispositif de régulation en température d'au moins une batterie électrique (1) d'un véhicule automobile, la batterie comprenant au moins un accumulateur électrique, le dispositif comportant un circuit fermé (2) qui, en service, est en relation de transferts thermiques avec ladite batterie de sorte à permettre la régulation de la température de la batterie, le circuit comprenant en série successivement:
- un bouilleur (3) comprenant un mélange diphasique d'un gaz régulateur avec un absorbant liquide,
- un condenseur (4) pour condenser le gaz régulateur s'échappant du bouilleur en son état de liquide régulateur,
- des moyens d'abaissement de la pression (5) du liquide régulateur,
- un évaporateur (6) pour évaporer le liquide régulateur et le faire retourner à son état de gaz régulateur,
- un absorbeur (7) pour absorber le gaz régulateur et reformer le mélange diphasique,
- des moyens de pompage (8) du mélange diphasique de l'absorbeur vers le bouilleur,
le circuit comportant en outre un canal (10) qui autorise la circulation du mélange diphasique du bouilleur vers l'absorbeur et qui s'étend en parallèle des moyens de pompage et **caractérisé en ce qu'**il comprend un premier organe de raccordement (12) qui est agencé pour, en service, mettre en relation de transferts thermiques le condenseur (4) ou l'évaporateur (6) avec la batterie (1) de sorte que le dispositif soit tout aussi apte à refroidir qu'à réchauffer la batterie.

2. Dispositif selon la revendication 1, dans lequel le premier organe de raccordement (12) est en outre agencé pour, en service, mettre en relation de transferts thermiques le condenseur (4) tout comme l'évaporateur (6) avec l'habitacle du véhicule (13).

3. Dispositif selon la revendication 1, dans lequel le premier organe de raccordement (12) est en outre agencé pour mettre en relation de transferts thermiques le condenseur (4) tout comme l'évaporateur (6) avec d'autres éléments du circuit.

4. Dispositif selon la revendication 3, dans lequel le premier organe de raccordement (12) est agencé pour mettre en relation de transferts thermiques le condenseur (4) avec le bouilleur (3).

5. Dispositif selon la revendication 1, comportant un organe de gestion (11) des transferts thermiques qui commande le dispositif pour permettre la régulation de la température de la batterie (1).

6. Dispositif selon la revendication 5, dans lequel l'organe de gestion (11) est agencé pour déterminer en continu une quantité d'énergie thermique à transmettre à la batterie (1) de sorte que la température de la batterie demeure dans une plage de températures donnée et pour commander en conséquence le dispositif.

7. Dispositif selon la revendication 1, dans lequel le gaz régulateur est de l'ammoniac gazeux et l'absorbant liquide est de l'eau.

8. Dispositif selon la revendication 1, comportant un deuxième organe de raccordement (15) qui est agencé pour mettre en relation de transferts thermiques l'absorbeur (7) avec le bouilleur (3).

9. Dispositif selon la revendication 8, dans lequel le deuxième organe de raccordement (15) est en outre agencé pour mettre en relation de transferts thermique les moyens de pompage (8) avec le bouilleur (3).

10. Dispositif selon les revendications 5 et 8, dans lequel le deuxième organe de raccordement (15) est en outre agencé pour mettre en relation de transferts thermiques l'organe de gestion (11) avec le bouilleur (3).

11. Dispositif selon la revendication 1 comprenant des moyens de chauffage (16) du bouilleur qui comportent un capteur thermique et une source de rayonnement associée au capteur thermique.

12. Dispositif selon la revendication 11, dans lequel la source de rayonnement est de type à technologie LED.

13. Dispositif selon la revendication 12, dans lequel la source de rayonnement comporte une lampe LED.

14. Dispositif selon la revendication 1, comportant une première enceinte (17) en un matériau thermiquement isolant dans lequel l'absorbeur, le bouilleur et les moyens de pompage sont agencés de sorte à être séparés du reste du circuit.

15. Véhicule automobile comportant au moins une batterie électrique, le véhicule comportant un dispositif de régulation de température de ladite batterie selon l'une des revendications précédentes.

16. Véhicule automobile selon la revendication 15, dans lequel le véhicule est à traction électrique, la batterie étant la source d'énergie principale du moteur électrique dudit véhicule.

## Patentansprüche

1. Vorrichtung zur Temperaturregelung mindestens einer elektrischen Batterie (1) eines Kraftfahrzeugs, wobei die Batterie mindestens einen elektrischen Akkumulator enthält, wobei die Vorrichtung einen geschlossenen Kreislauf (2) umfasst, der im Betrieb derart in Wärmeübertragungsbeziehung mit der genannten Batterie steht, dass er die Regelung der Temperatur der Batterie ermöglicht, wobei der Kreislauf nacheinander in Reihe umfasst:
- einen Sieder (3), der eine zweiphasige Mischung aus einem Regulatorgas und einem flüssigen Absorptionsmittel umfasst,
- einen Kondensator (4) zum Kondensieren des Regulatorgases, das aus dem Sieder in seinem Zustand einer Regulatorflüssigkeit entweicht,
- Mittel zum Absenken des Druckes (5) der Regulatorflüssigkeit,
- einen Verdampfer (6) zum Verdampfen der Regulatorflüssigkeit und zum Rückführen derselben in ihren Zustand eines Regulatorgases,
- einen Absorber (7) zum Absorbieren des Regulatorgases und zum erneuten Bilden der zweiphasigen Mischung,
- Pumpmittel (8) zum Pumpen der zweiphasigen Mischung von dem Absorber in Richtung des Sieders,
wobei der Kreislauf ferner einen Kanal (10) umfasst, der die Zirkulation der zweiphasigen Mischung von dem Sieder in Richtung des Absorbers gestattet und der sich parallel zu den Pumpmitteln erstreckt, und **dadurch gekennzeichnet, dass** die Vorrichtung ein erstes Verbindungselement (12) umfasst, das ausgebildet ist, um im Betrieb den Kondensator (4) oder den Verdampfer (6) in Wärmeübertragungsbeziehung mit der Batterie (1) zu bringen, so dass die Vorrichtung gleichermaßen dazu geeignet ist, die Batterie zu kühlen wie zu erwärmen.

2. Vorrichtung nach Anspruch 1, bei der das erste Verbindungselement (12) ferner ausgebildet ist, um im Betrieb den Kondensator (4) wie auch den Verdampfer (6) in Wärmeübertragungsbeziehung mit der Fahrgastzelle des Fahrzeugs (13) zu bringen.

3. Vorrichtung nach Anspruch 1, bei der das erste Verbindungselement (12) ferner ausgebildet ist, um den Kondensator (4) wie auch den Verdampfer (6) in Wärmeübertragungsbeziehung mit weiteren Elementen des Kreislaufes zu bringen.

4. Vorrichtung nach Anspruch 3, bei der das erste Verbindungselement (12) ausgebildet ist, um den Kondensator (4) in Wärmeübertragungsbeziehung mit dem Sieder (3) zu bringen.

5. Vorrichtung nach Anspruch 1, umfassend ein Organ (11) zur Steuerung der Wärmeübertragungen, das die Vorrichtung steuert, um die Regelung der Temperatur der Batterie (1) zu ermöglichen.

6. Vorrichtung nach Anspruch 5, bei der das Steuerungsorgan (11) ausgebildet ist, um kontinuierlich eine Menge an zur Batterie (1) zu übertragenden Wärmeenergie zu bestimmen, so dass die Temperatur der Batterie in einem gegebenen Temperaturbereich bleibt, und um die Vorrichtung dementsprechend zu steuern.

7. Vorrichtung nach Anspruch 1, bei der das Regulatorgas gasförmiges Ammoniak und das flüssige Absorptionsmittel Wasser ist.

8. Vorrichtung nach Anspruch 1, umfassend ein zweites Verbindungselement (15), das ausgebildet ist, um den Absorber (7) in Wärmeübertragungsbeziehung mit dem Sieder (3) zu bringen.

9. Vorrichtung nach Anspruch 8, bei der das zweite Verbindungselement (15) ferner ausgebildet ist, um die Pumpmittel (8) in Wärmeübertragungsbeziehung mit dem Sieder (3) zu bringen.

10. Vorrichtung nach den Ansprüchen 5 und 8, bei der das zweite Verbindungselement (15) ferner ausgebildet ist, um das Steuerungsorgan (11) in Wärmeübertragungsbeziehung mit dem Sieder (3) zu bringen.

11. Vorrichtung nach Anspruch 1, umfassend Heizmittel (16) zum Erhitzen des Sieders, die einen Wärmesensor und eine mit dem Wärmesensor verbundene Strahlungsquelle umfassen.

12. Vorrichtung nach Anspruch 11, bei der die Strahlungsquelle der Art mit LED-Technik ist.

13. Vorrichtung nach Anspruch 12, bei der die Strahlungsquelle eine LED-Lampe umfasst.

14. Vorrichtung nach Anspruch 1, umfassend einen ersten abgeschlossenen Raum (17) aus einem wärmeisolierenden Material, in dem der Absorber, der Sieder und die Pumpmittel so angeordnet sind, dass sie vom Rest des Kreislaufes getrennt sind.

15. Kraftfahrzeug, umfassend mindestens eine elektrische Batterie, wobei das Fahrzeug eine Vorrichtung zur Temperaturregelung der Batterie nach einem der vorhergehenden Ansprüche umfasst.

16. Kraftfahrzeug nach Anspruch 15, bei dem das Fahrzeug einen elektrischen Antrieb hat, wobei die Batterie die Hauptenergiequelle des Elektromotors des Fahrzeugs ist.

## Claims

1. Apparatus for regulating the temperature of at least one electric battery set (1) of a motor vehicle, the battery set comprising at least one electric storage battery, the apparatus comprising a closed circuit (2) which, in service, is in a heat transfer relationship with said battery set in such a way as to enable the temperature of the battery set to be regulated, the circuit comprising, in series, successively:
- a vaporising means (3) comprising a biphasic mixture of a regulating gas with a liquid absorbent,
- a condenser (4) for condensing the regulating gas escaping from the vaporising means into its state as a regulating liquid,
- means (5) for lowering the pressure of the regulating liquid,
- a evaporator (6) for evaporating the regulating liquid and causing it to return to its state as a regulating gas,
- an absorber (7) for absorbing the regulating gas and re-forming the biphasic mixture,
- means (8) for pumping the biphasic mixture from the absorber towards the vaporising means,
the circuit also comprising a duct (10) which permits the biphasic mixture to flow from the vaporising means towards the absorber and which extends in parallel with the pumping means and, **characterised in that** it comprises a first connecting member (12) which is adapted to, in service, put the condenser (4) or the evaporator (6) into a heat transfer relationship with the battery set (1) such that the apparatus is capable of both cooling and heating the battery set.

2. Apparatus according to claim 1, wherein the first connecting member (12) is also adapted to, in service, put the condenser (4), like the evaporator (6), into a heat transfer relationship with the passenger compartment (13) of the vehicle.

3. Apparatus according to claim 1, wherein the first connecting member (12) is also adapted to put the condenser (4), like the evaporator (6), into a heat transfer relationship with other comnponents of the circuit.

4. Apparatus according to claim 3, wherein the first connecting member (12) is adapted to put the condenser (4) into a heat transfer relationship with the vaporising means (3).

5. Apparatus according to claim 1, comprising a member (11) for managing heat transfers which controls the apparatus for enabling the temperature of the battery set (1) to be regulated.

6. Apparatus according to claim 5, wherein the managing member (11) is adapted to continuously determine a quantity of thermal energy to be transmitted to the battery set (1) such that the temperature of the battery set remains within a given temperature range, and to control the apparatus accordingly.

7. Apparatus according to claim 1, wherein the regulating gas is gaseous ammonia and the liquid absorbent is water.

8. Apparatus according to claim 1, comprising a second connecting member (15) which is adapted to put the absorber (7) into a heat transfer relationship with the vaporising means (3).

9. Apparatus according to claim 8, wherein the second connecting member (15) is also adapted to put the pumping means (8) into a heat transfer relationship with the vaporising means (3).

10. Apparatus according to claims 5 and 8, wherein the second connecting member (15) is also adapted to put the managing member (11) into a heat transfer relationship with the vaporising means (3).

11. Apparatus according to claim 1, comprising means (16) for heating the vaporising means which comprise a heat sensor and a source of radiation associated with the heat sensor.

12. Apparatus according to claim 11, wherein the source of radiation is of the type employing LED technology.

13. Apparatus according to claim 12, wherein the source of radiation comprises an LED lamp.

14. Apparatus according to claim 1, comprising a first enclosure (17) made of a thermally insulating material in which the absorber, vaporising means and pumping means are so arranged as to be separated from the remainder of the circuit.

15. Motor vehicle comprising at least one electric battery set, the vehicle comprising an apparatus for regulating the temperature of said battery set according to one of the preceding claims.

16. Motor vehicle according to claim 15, wherein the vehicle employs electric traction, the battery set being the main energy source for the electric motor of said vehicle.
